# EUROPÄISCHE PATENTANMELDUNG

(11) **EP 2 433 736 A1**
(43) Veröffentlichungstag der Anmeldung: **28.03.2012**
(21) Anmeldenummer: 11007808.6
(22) Anmeldetag: 26.09.2011
(51) Int. Cl.: B23H 9/04

(54) **Vorrichtung zum Texturieren einer Walze**

(30) Priorität: 27.09.2010 DE 102010046559
(71) Anmelder: H. Kleinknecht & Co. GmbH, 57080 Siegen-Eisern (DE)
(72) Erfinder: Hauck, Christoph, 57258 Freudenberg (DE); Muscheid, Bernd, 57234 Wilnsdorf (DE)
(74) Vertreter: Dörner, Kötter & Kollegen

(57) **Zusammenfassung**

Die Erfindung betrifft eine Vorrichtung zum Texturieren einer Walze, umfassend einen Treibstock, einen Reitstock sowie wenigstens einen Setzstock zur Aufnahme einer Walze, die innerhalb eines Walzenbeckens angeordnet und auf wenigstens einer Führungsschiene geführt sind, sowie beidseitig einer aufgenommenen Walze angeordnete Elektroden, wobei wenigstens ein Antrieb angeordnet ist, über den der Treibstock, der Reitstock und der wenigstens eine Setzstock entlang der wenigstens einen Führungsschiene bewegbar ist. Die wenigstens eine Führungsschiene ist oberhalb der zwischen Treibstock (2) und Reitstock (3) gebildeten Einspannmittelachse angeordnet.

## Beschreibung

Die Erfindung betrifft eine Vorrichtung zum Texturieren einer Walze nach dem Oberbegriff des Patentanspruchs 1.

Zur Texturierung einer Walze kommt regelmäßig ein Erodierprozess zum Einsatz. Dieser als Electrical-Discharge-Texturing (EDT) bezeichnete Prozess ermöglicht eine hochgenaue Konturierung der Walzenoberfläche. Beim EDT-Prozess werden Elektroden auf einen exakt geregelten Spalt zur rotierenden Walzenoberfläche herangefahren und in axialer Richtung osziliert. Durch den Erodierimpuls formieren sich die Partikel im Dielektrikum zwischen Walze und Elektrode zu einer Dipolbrücke, wodurch ein Stromfluss erzielt wird. Hierdurch wird ein kleiner Bereich der Walzenoberfläche aufgeschmolzen und es bildet sich im Dielektrikum eine Gasblase. Wird der Erodierimpuls abgeschaltet, implodiert die Gasblase, wodurch das geschmolzene Walzenmaterial herausgeschleudert wird. Durch die hierdurch erzeugten muldenförmigen Vertiefungen wird insgesamt eine diffuse Struktur erzielt. Die gewünschte Rauheit ist unabhängig von der Walzenhärte über Parameter wie Spannung, Steuerzeiten und Abstand der Elektroden einstellbar.

Bei bekannten Vorrichtungen wird die Walze in einem Walzenbecken positioniert, das mit einem Dielektrikum befüllt wird, sodass die Walze etwa zur Hälfte ihres Durchmessers in das Dielektrikum eintaucht, in das die Elektroden zur Anstellung an die Walze hineinragen. Hierzu wird die Walze zwischen einem Treibstock und einem Reitstock eingespannt, wobei sie auf einem oder mehreren Setzstöcken aufliegt. Hierzu sind Treibstock, Reitstock sowie Setzstöcke auf einer parallel zur Einspannachse auf dem Grund des Walzenbeckens angeordneten Führungsschiene verschiebbar angeordnet. Zur Bewegung der Treib-, Reit- und Setzstöcke entlang der Führungsschiene sind weisen diese jeweils einen Antrieb auf. Die Setzstöcke sind zur vertikalen Anstellung an die Walze zusätzlich mit einer Hebevorrichtung versehen, über welche der Abstand der Setzstöcke gegenüber der Führungsschiene veränderbar ist.

Im Zuge der Texturierung von Walzen gelangen die aus dem Walzenmaterial herausgeschleuderten Partikel in das Dielektrikum, wo sie auf den Boden des Walzenbeckens absinken. Durch den hierdurch sich ansammelnden Partikelschlamm wird die Führung zwischen den Treib-, Reit- und Setzstöcken und der Führungsschiene beeinträchtigt, wodurch die Standzeit verkürzt ist. Zudem gestaltet sich die Reinigung des Walzenbeckens aufwändig, wobei der Partikelschlamm regelmäßig nicht vollständig entfernt werden kann. Nicht zuletzt gestaltet sich die Ausführung der Führung aufwändig, da vorhandene Schmierstellen zur Verhinderung einer Kontamination des Dielektrikums besonders gekapselt sein müssen.

Hier will die Erfindung Abhilfe schaffen. Der Erfindung liegt die Aufgabe zugrunde, eine Vorrichtung zum Texturieren einer Walze zu schaffen, bei der eine Beeinträchtigung der Führung zwischen den Treib-, Reit- und Setzstöcken und der Führungsschiene vermieden ist. Gemäß der Erfindung wird diese Aufgabe durch die Merkmale des kennzeichnenden Teils des Patentanspruchs 1 gelöst.

Mit der Erfindung ist eine Vorrichtung zum Texturieren einer Walze geschaffen, bei der eine Beeinträchtigung der Führung zwischen den Treib-, Reit- und Setzstöcken und der Führungsschiene vermieden ist. Durch die Anordnung der Führungsschienen oberhalb der zwischen Treibstock und Reitstock gebildeten Einspannmittelachse ist gewährleistet, dass diese Führungsschienen oberhalb der Dielektrikum- Spiegels verlaufen, wodurch ein Kontakt mit dem Dielektrikum vermieden ist. Hierdurch ist sowohl eine Verschmutzung der Führungen vermieden, als auch eine Kontamination des Dielektrikums durch die nunmehr optimal schmierbaren Führungsschienen verhindert. Weiterhin ist das Walzenbecken sehr leicht von Partikelschlamm zu reinigen, da keine Führungen mehr an dem Beckenboden vorhanden sind.

In Weiterbildung der Erfindung weisen der Treibstock, der Reitstock sowie der wenigstens eine Setzstock zwei seitlich gegenüberliegend auskragende Arme auf und das Walzenbecken ist innerhalb eines Rahmes angeordnet, an dessen beiden Längsseiten parallel zueinander zwei innere Führungsschienen angeordnet sind, in denen der Treibstock, der Reitstock sowie der wenigstens eine Setzstock mit ihren Armen geführt gehalten sind. Hierdurch ist eine stabile Anordnung erzielt, bei welcher der Treibstock, der Reitstock sowie der wenigstens eine Setzstock in den Bereich des Walzenbeckens hineingehängt sind. Es besteht kein Kontakt mehr zu dem Walzenbecken, wodurch Wartungsarbeiten erleichtert sind.

In Ausgestaltung der Erfindung weist der Rahmen zumindest an seinen Längsseiten einen L-förmigen Querschnitt auf, an dessen horizontalen Schenkel parallel zum vertikalen Schenkel eine vertikale Stützwand angeordnet ist, auf der die innere Führungsschiene angeordnet ist. Hierdurch ist eine vertikale Krafteinleitung in den Rahmen erzielt, wodurch eine hohe Stabilität erzielt ist.

In weiterer Ausgestaltung der Erfindung ist ein Multifunktionsfahrmodul vorgesehen, das zwei seitlich gegenüberliegend auskragende Arme aufweist, wobei oberhalb der inneren Führungsschienen parallel beabstandet zueinander zusätzlich zwei obere Führungsschienen angeordnet sind, in denen das Multifunktionsfahrmodul mit seinen Armen geführt gehalten ist. Ein solches Multifunktionsfahrmodul ermöglicht über die separaten zusätzlichen oberen Führungsschienen eine Zugänglichkeit der gesamten Bearbeitungsstrecke und kann sowohl zur Positions- und Zustandsdatenerfassung als auch zur Bearbeitung der Walze von oben, beispielsweise zum Abtragen von Rauheitsspitzen eingesetzt werden. Auch die zusätzlichen oberen Führungsschienen haben keinerlei Kontakt mit dem innerhalb des Walzenbeckens befindlichen Dielektrikum.

Bevorzugt sind die oberen Führungsschienen (14) auf den vertikalen Schenkeln des L-förmigen Querschnitts der Längsseiten des Rahmens (12) angeordnet. Hierdurch ist eine horizontal zu den inneren Führungsschienen versetzte und zu diesen gleichzeitig erhöhte Anordnung der oberen Führungsschienen erzielt, wodurch eine einfache zu realisierende, kollisionsfreie Anordnung des Multifunktionsfahrmoduls ermöglicht ist.

In weiterer Ausgestaltung der Erfindung ist eine Umhausung zur Kapselung der Vorrichtung angeordnet ist, welche Kapselkörper umfasst, wobei an den Außenseiten der beiden Längsseiten des Rahmens äußere Führungsschienen angeordnet sind, in denen die Kapselkörper den Rahmen umgreifend verschiebbar geführt sind. Hierdurch ist ein verschieben der Kapselkörper ohne jegliche Beeinträchtigung der anderen auf Führungsschienen verschiebbar angeordneten Elemente ermöglicht.

Bevorzugt ist das Multifunktionsfahrmodul derart ausgebildet, dass es bei geschlossener Umhausung entlang der gesamten Bearbeitungsstrecke oberhalb des Treibstocks, des Reitstocks und des wenigstens eine Setzstocks verfahrbar ist. Hierdurch ist eine Datenaufnahme oder auch ein Bearbeitungsprozess mittels des Multifunktionsfahrmoduls während eines Erodierprozesses ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

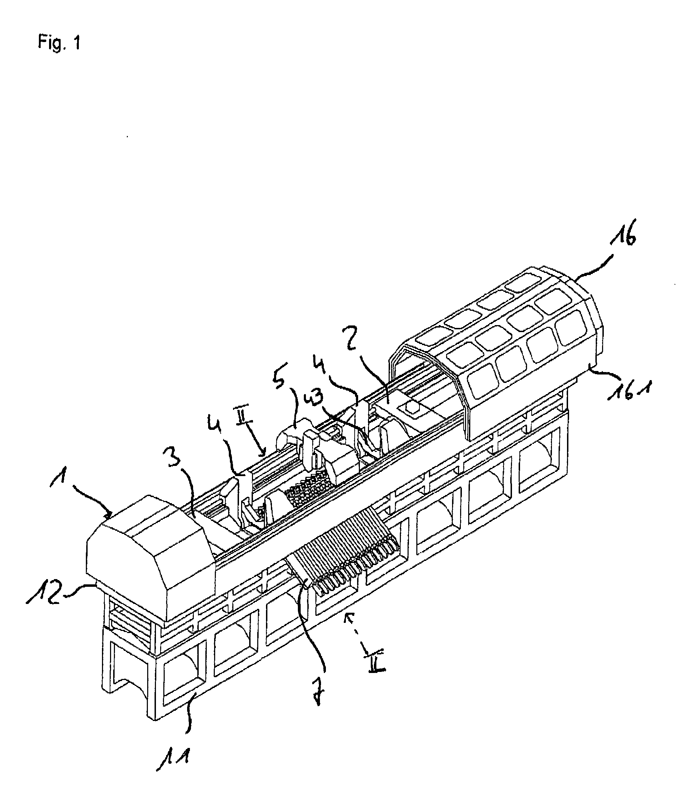

- Figur 1: die schematische räumliche Darstellung einer Vorrichtung zum Texturieren einer Walze;
- Figur 2: die schematische Darstellung der Vorrichtung gemäß Figur 1 im Schnitt II-II;

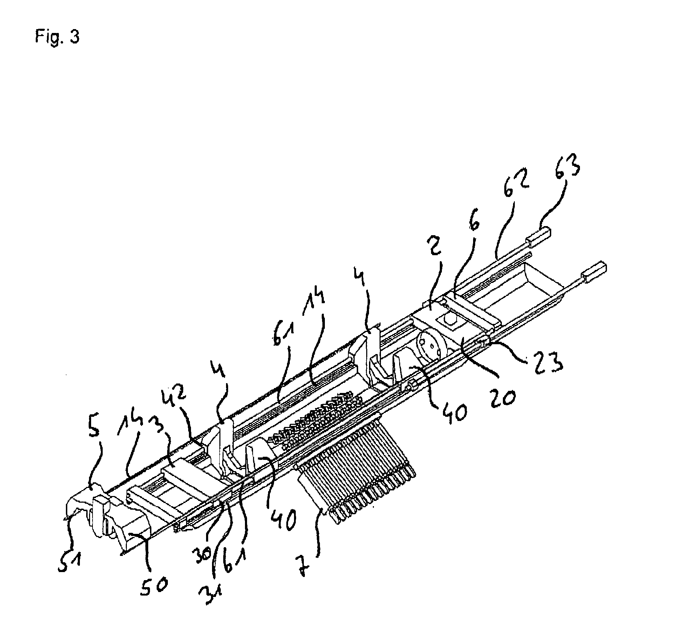

- Figur 3: die Detailansicht der Vorrichtung gemäß Figur 1 ohne Maschinenkorpus und

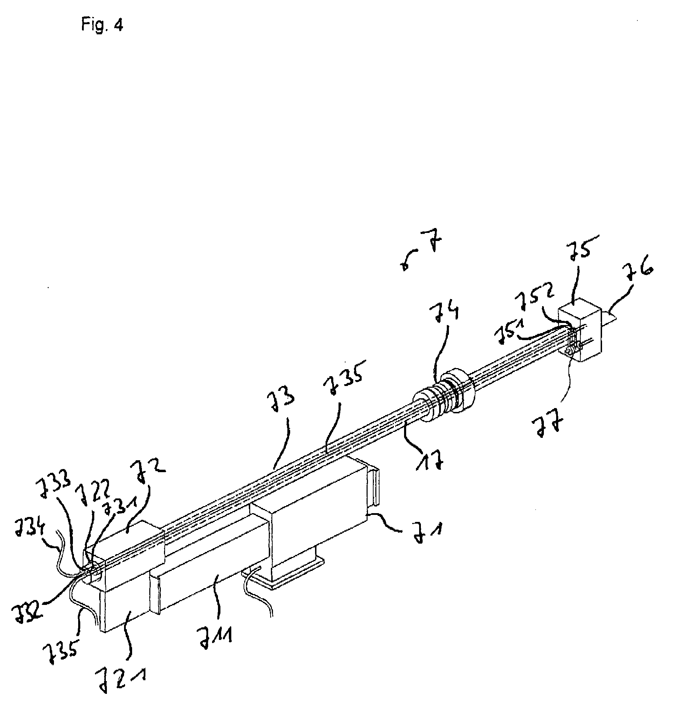

- Figur 4: die schematische Darstellung einer Elektrodeneinheit der Vorrichtung gemäß Figur 1.

Die als Ausführungsbeispiel gewählte Vorrichtung zum Texturieren einer Walze umfasst im Wesentlichen einen Maschinenkorpus 1 mit einem Walzenbecken 15, in dem in bekannter Art und Weise ein Treibstock 2 sowie ein Reitstock 3 auf einer gemeinsamen Achse beabstandet zueinander angeordnet sind. Zwischen Treibstock 2 und Reitstock 3 sind zwei Setzstöcke 4 positioniert, welche jeweils mit einem Erdungsband 43 versehen sind, an dem eine in die durch Treibstock 3, Reitstock 4 und Setzstöcke 5 gebildete Aufnahme eingespannte Walze 8 anliegt. Das Walzenbecken 15 dient der Aufnahme eines Dielektrikums 17. An den Seitenwänden des Walzenbeckens 5 sind gegenüberliegend zwei Reihen von Elektrodeneinheiten 3 angeordnet. Die Vorrichtung ist über eine teleskopartig ausgebildete Umhausung 16 einkapselbar.

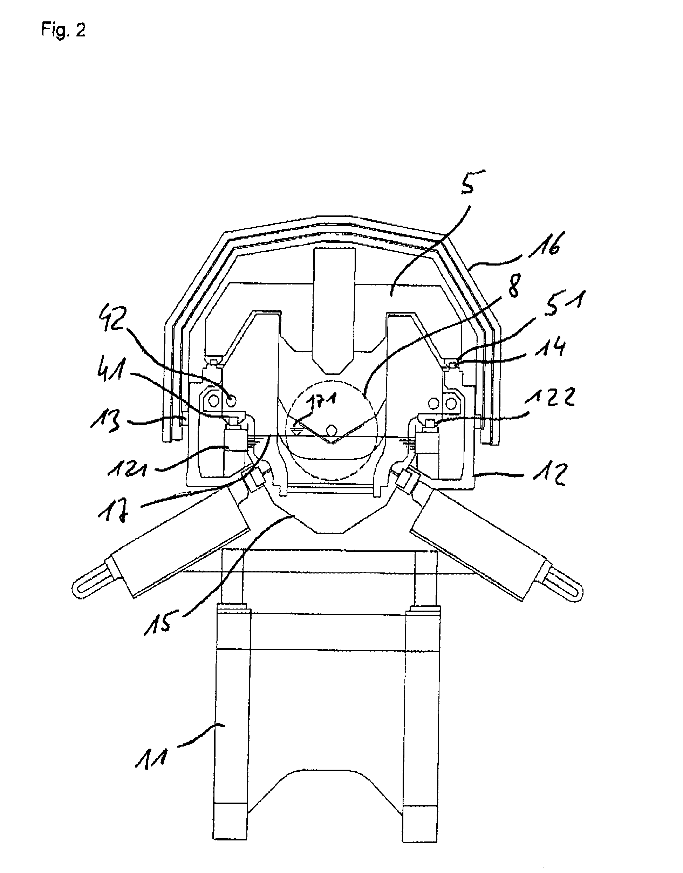

Der Maschinenkorpus 1 besteht aus einem Ständerwerk 11, welches einen umlaufenden Rahmen 12 aufnimmt, in dem das Walzenbecken 15 angeordnet ist. Der Rahmen 12 weist einen im Wesentlichen L-förmigen Querschnitt auf, wobei die horizontalen bodenseitigen Stege des Querschnitts nach innen abgewinkelt ausgebildet sind und an dem Walzenbecken 15 anliegen (vgl. Figur 2). Seitlich ist an dem Rahmen 12 an seinen Längsseiten jeweils eine äußere Führungsschiene 13 zur Aufnahme der teleskopartig angeordneten Kapselkörper 161 der Umhausung 16 angeordnet. An seiner der Umhausung 16 zugewandten Oberseite ist eine weitere, obere Führungsschiene 14 zur Aufnahme eines Multifunktionsfahrmoduls 5 angeordnet. Parallel zu den Außenwänden des Rahmens 12 ist innen an dem horizontalen Boden des Rahmens 12 an beiden Längsseiten jeweils eine Stützwand 121 angeordnet, an denen das Walzenbecken 15 fixiert ist. Auf der Oberkante der Stützwände 121 ist wiederum eine innere Führungsschiene 122 zur Aufnahme von Treibstock 2, Reitstock 3 und Setzstöcken 4 angebracht. Die innen liegenden Führungsschienen 122, 14 des Rahmens 12 sind derart positioniert, dass sie bei gefülltem Walzenbecken 15 oberhalb des Dielektrikumsspiegels 171 angeordnet sind, derart, dass diese nicht in Kontakt mit dem Dielektrikum 17 kommen können.

Treibstock 2, Reitstock 3 sowie die beiden Setzstöcke 4 weisen gegenüberliegend angeordnete auskragende Arme 20, 30, 40 auf, die mit Gleitschienen 21, 31, 41 versehen sind, mit denen sie auf den gegenüberliegend angeordneten inneren Führungsschienen 122 des Rahmens 12 verschiebbar gelagert sind. Parallel zu den Gleitschienen 21, 31, 41 sind in den Armen 20, 30, 40 des Treibstocks 2, des Reitstocks 3 sowie der Setzstöcke 4 an beiden Seiten Mitnehmerdurchführungen 22 eingebracht, durch die zwei Mitnehmerstangen 61 eines Antriebsrahmens 6 geführt sind. Treibstock 2, Reitstock 3 sowie Setzstöcke 4 sind über die Mitnehmerdurchführungen 22, 32, 42 auf den Mitnehmerstangen 61 des Antriebsrahmens verschiebbar sowie über einen - nicht dargestellten - Klemmmechanismus festsetzbar.

An den seitlichen Armen 20 des Treibstocks 2 ist zu beiden Seiten jeweils eine Spindelaufnahme 23 angeordnet, durch die jeweils eine Spindel 62 geführt ist. Die Spindeln 62 sind über miteinander synchronisierte Antriebe 63 rotierbar. Zur Positionierung von Treibstock 2, Reitstock 3 sowie Setzstöcken 4 innerhalb des Rahmens 12 des Maschinenkorpus 1 werden die Spindeln 22 rotiert, wodurch der Treibstock 2 horizontal auf der inneren Führungsschiene 122 des Rahmens 12 bewegt wird. Wird der Treibstock 2 über die Mitnehmerdurchführung 22 an den Mitnehmerstangen 61 des Antriebsrahmens 6 festgesetzt, so wird der gesamte Antriebsrahmen 6 sowie die auf den Mitnehmerstangen 61 des Antriebsrahmens 6 festgesetzten Funktionselemente Reitstock 3 und Setzstöcke 4 bewegt. Hat ein Funktionselement seine Position erreicht, wird die Festsetzung durch die entsprechende Mitnehmerdurchführung 32, 42 gelöst. In diesem Fall werden die Mitnehmerstangen 61 des Antriebsrahmens 6 durch die Mitnehmerdurchführungen 32 bzw. 42 hindurchbewegt. Separate Antriebe der Funktionselemente Treibstock 2, Reitstock 3 und Setzstöcke 4 sind nicht erforderlich.
Die Setzstöcke 4 sind mit den seitlichen Armen 40 über - nicht dargestellte - Lifter verbunden, über welche die Setzstöcke 4 in Abhängigkeit vom Durchmesser der zu bearbeiteten Walze 8 vertikal verstellbar sind. Die - nicht dargestellten - Lifter können beispielsweise über einen vertikalen Spindeltrieb gebildet sein. Alternativ sind auch pneumatische oder elektrische Verstelleinrichtungen möglich.

Auf der oberen Führungsschiene 14 des Rahmens 12 ist ein Multifunktionsfahrmodul 5 verschiebbar gelagert. Hierzu weist das Multifunktionsfahrmodul 5 seitliche Arme 50 auf, welche mit Gleitschienen 51 versehen sind, die die Führungsstege 14 umgreifen. Das Multifunktionsfahrmodul ist dabei derart ausgebildet, dass es auch bei geschlossener Umhausung 16 frei über die Funktionselemente Treibstock 2, Reitstock 3 und Setzstöcke 4 über die gesamte Länge des Rahmens 12 verfahrbar ist. Das Multifunktionsfahrmodul 5 kann mit beliebigen Einrichtungen ausgestattet sein. Diese Einrichtungen können für die Maschinenüberwachung und Einrichtung selbst Verwendung finden. Des weiteren können hier auch beispielsweise Einrichtungen für eine ergänzende Bearbeitung der texturierten Oberfläche angeordnet sein. Das Multifunktionsfahrmodul 5 ist mit einem - nicht dargestellten - separaten Antrieb versehen, sodass es unabhängig von den Antrieben 63 des Antriebsrahmens 6 verfahrbar ist.

Die an den Seitenwänden des Walzenbeckens 5 angeordneten Elektrodeneinheiten 3 sind im Ausführungsbeispiel derart angestellt, dass sich ihre verlängerte Achse in der Einspannachse der Walze 8 mit der jeweils gegenüberliegenden Elektrodeneinheit 7 in einem Winkel von 55 Grad schneidet. Die Elektrodeneinheiten 7 umfassen jeweils einen Linearmotor 71, dessen Läufer 711 mit einem Anschlussblock 72 verbunden ist, an dem ein Ausleger 73 befestigt ist, der einen Elektrodenkopf 75 zur Aufnahme einer Elektrode 76 aufweist. Der Ausleger 73 ist im Ausführungsbeispiel in Form einer Hohlwelle ausgebildet, welche in einer Bohrung 722 des Anschlussblocks 72 eingreift. Der Anschlussblock 72 ist Ober ein Flanschteil 721 mit dem Läufer 711 des Linearmotors 71 verbunden, derart, dass der Ausleger 73 parallel zum Läufer 711 angeordnet ist.

An ihrer dem Anschlussblock 72 zugewandten Seite ist in dem hohlwellenartig ausgebildeten Ausleger 73 ein Anschlussteil 731 abdichtend eingebracht. Das Anschlussteil 731 weist eine Leitungsdurchführung 732 für ein elektrisches Kabel 735 auf, welches mittig innerhalb des Auslegers 73 entlang seiner Mittelachse angeordnet ist und das mit dem am gegenüberliegenden Ende des Auslegers 73 angeordneten Elektrodenkopf 75 zur elektrischen Versorgung der von diesem aufgenommenen Elektrode 76 verbunden ist. Weiterhin ist in dem Anschlussteil 731 ein Fluidanschluss 733 zum Anschluss einer Fluidleitung 734 angeordnet. Die Fluidleitung 734 dient der Befüllung des hohlwellenartigen Auslegers 73 mit Dielektrikum 17. Der Ausleger 73 dient so als Zuleitung für das Dielektrikum 17 zur Spülung der Elektrode 76. Durch die Umspülung des mittig innerhalb des Auslegers 73 geführten Kabels 735 wird das Kabel 735 durch das umspülende Dielektrikum 17 gekühlt. Zugleich ist es vor äußeren Beschädigungen geschützt. Alternativ kann auch eine separate Zuleitung für das Dielektrikum zur Spülung der Elektrode angeordnet sein.

Der Elektrodenkopf 75 weist eine Bohrung 751 auf, welche das dem Anschlussblock 72 gegenüberliegende Ende des Auslegers 73 aufnimmt. Die Bohrung 751 ist derart innerhalb des Elektrodenkopfes 75 geführt, dass durch den Ausleger 73 geleitetes Dielektrikum 17 die von dem Elektrodenkopf 75 aufgenommene Elektrode 76 spült. Hierzu kann die Elektrode 76 hohl ausgebildet und mit nach außen führenden Öffnungen für den Austritt des Dielektrikums 17 versehen sein. Im Übergang zwischen Ausleger 73 und Elektrodenkopf 75 ist ein Ventil 752 angeordnet, das mit einem an dem Elektrodenkopf 75 positionierten Endschalter 77 verbunden ist. Der Endschalter 77 ist derart ausgebildet, dass er im eingefahrenen Zustand des Auslegers an der Innenwand des Walzenbeckens 15 betätigt wird, wodurch das Ventil 752 geschlossen wird. Hierdurch wird verhindert, dass im eingefahrenen Zustand, beispielsweise bei der Textierung einer kurzen Walze, wo die entsprechende Elektrode nicht benötigt wird, eine unnötige Spülung dieser inaktiven Elektrode 76 mit Dielektrikum 17 erfolgt.

Die Ausleger 73 der Elektrodeneinheiten 7 sind durch eine Durchführung 74 durch die Wandung des Walzenbeckens 15 geführt, durch welche die Ausleger 73 gegenüber der Wandung des Walzenbeckens 15 abgedichtet sind.

Die Linearmotoren 71 der Elektrodeneinheiten 7 sind im Ausführungsbeispiel mit einer - nicht dargestellten - Steuer- und Regeleinheit verbunden, über welche die Anstellung der Elektroden 76 an die zu texturierende Walze 8 derart erfolgt, dass der Abstand zwischen Elektrode 76 und Walze 8 während des Erodierprozesses konstant ist. Die - nicht dargestellte - Steuer- und Regeleinheit ist mit einer - ebenfalls nicht dargestellten - Auswertungseinheit verbunden, welche derart eingerichtet ist, dass auf Basis der Anstellpositionsdaten der Elektroden sowie von hinterlegten Sollmaßdaten der zu bearbeitenden Walze 8 die Maßhaltigkeit der Walze 8 ermittelt und die Ist-Maße der Walze 8 gegenüber den hinterlegten Soll-Maßen grafisch auf einem Bildschirm dargestellt werden. Die enorme Genauigkeit der eingesetzten Linearmotoren 71 ermöglicht dabei die Ermittlung geringster Abweichungen.

## Patentansprüche

1. Vorrichtung zum Texturieren einer Walze, umfassend einen Treibstock, einen Reitstock sowie wenigstens einen Setzstock zur Aufnahme einer Walze, die innerhalb eines Walzenbeckens angeordnet und auf wenigstens einer Führungsschiene geführt sind, sowie beidseitig einer aufgenommenen Walze angeordnete Elektroden, wobei wenigstens ein Antrieb angeordnet ist, über den der Treibstock, der Reitstock und der wenigstens eine Setzstock entlang der wenigstens einen Führungsschiene bewegbar ist, **dadurch gekennzeichnet, dass** die wenigstens eine Führungsschiene oberhalb der zwischen Treibstock (2) und Reitstock (3) gebildeten Einspannmittelachse angeordnet ist.

2. Vorrichtung nach Anspruch 1, **dadurch gekennzeichnet, dass** der Treibstock (2), der Reitstock (3) sowie der wenigstens eine Setzstock (4) zwei seitlich gegenüberliegend auskragende Arme (20, 30, 40) aufweisen und dass das Walzenbecken (15) innerhalb eines Rahmes (12) angeordnet ist, an dessen beiden Längsseiten parallel zueinander zwei innere Führungsschienen (122) angeordnet sind, auf denen der Treibstock (2), der Reitstock (3) sowie der wenigstens eine Setzstock (4) über ihre Arme (20, 30, 40) geführt gehalten sind.

3. Vorrichtung nach Anspruch 2, **dadurch gekennzeichnet, dass** der Rahmen (12) zumindest an seinen Längsseiten einen L-förmigen Querschnitt aufweist,
an dessen horizontalen Schenkel parallel zum vertikalen Schenkel eine vertikale Stützwand (121) angeordnet ist. auf der die innere Führungsschiene (122) angeordnet ist.

4. Vorrichtung nach Anspruch 2 oder 3, **dadurch gekennzeichnet, dass** ein Multifunktionsfahrmodul (5) vorgesehen ist, das zwei seitlich gegenüberliegend auskragende Arme (50) aufweist, wobei oberhalb der inneren Führungsschienen (122) parallel beabstandet zueinander zusätzlich zwei obere Führungsschienen (14) angeordnet sind, auf denen das Multifunktionsfahrmodul (5) mit seinen Armen (50) geführt gehalten ist.

5. Vorrichtung nach Anspruch 4, **dadurch gekennzeichnet, dass** die oberen Führungsschienen (14) auf den vertikalen Schenkeln des L-förmigen Querschnitts der Längsseiten des Rahmens (12) angeordnet sind.

6. Vorrichtung nach einem der Ansprüche 2 bis 5, **dadurch gekennzeichnet, dass** eine Umhausung (16) zur Kapselung der Vorrichtung angeordnet ist, welche Kapselkörper (161) umfasst, wobei an den Außenseiten der beiden Längsseiten des Rahmens (12) zusätzlich äußere Führungsschienen (13) angeordnet sind, in denen die Kapselkörper(16) den Rahmen (12) umgreifend verschiebbar geführt sind.

7. Vorrichtung nach 6, **dadurch gekennzeichnet, dass** das Multifunktionsfahrmodul (5) derart ausgebildet ist, dass es bei geschlossener Umhausung (16) entlang der gesamten Bearbeitungsstrecke oberhalb des Treibstocks (2), des Reitstocks (3) und des wenigstens eine Setzstocks (4) verfahrbar ist.
